(19) Europäisches Patentamt
European Patent Office
Office européen des brevets

(11) EP 3 076 576 A1

(12) **EUROPEAN PATENT APPLICATION**

(43) Date of publication:
**05.10.2016 Bulletin 2016/40**

(51) Int Cl.:
*H04L 1/06* (2006.01)   *H04L 27/26* (2006.01)

(21) Application number: **15162248.7**

(22) Date of filing: **01.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **NTT DoCoMo, Inc.**
**Tokyo (JP)**

(72) Inventors:
• **Kusume, Katsutoshi**
**80687 München (DE)**
• **Weitkemper, Petra**
**80687 München (DE)**
• **Bazzi, Jamal**
**80687 München (DE)**
• **Iwamura, Mikio**
**80687 München (DE)**

(74) Representative: **Betten & Resch**
**Patent- und Rechtsanwälte PartGmbB**
**Maximiliansplatz 14**
**80333 München (DE)**

Remarks:
Amended claims in accordance with Rule 137(2) EPC.

(54) **TRANSMIT DIVERSITY FROM ORTHOGONAL DESIGN FOR FBMC/OQAM**

(57)   A method and apparatus are presented for transmitting a multicarrier signal, wherein said signal is of the offset quadrature amplitude modulation, OQAM, type comprising symbols in the time-frequency space, wherein the symbols include a data containing symbol and a precoding symbol, wherein the precoding symbol is selected such that the intrinsic interference at the data containing symbol, when received by a receiver, is forced to a value which ensures an applied space-time or space-frequency code. An Alamouti like space-time coding (or transmit diversity) is applied to a Filter Bank Multicarrier (FBMC) transmission using Offset QAM (OQAM). In FBMC, due to the orthogonality in the real domain only, an intrinsic interference results thereof for the imaginary component. The intrinsic interference terms are not equivalent at each antenna since it depends on the surrounding symbols. The application proposes to use only one precoding symbol per antenna such that the received signal at the data symbols is equivalent to a PAM Alamouti scheme, ie the precoding symbols condition the overall intrinsic interference to a given value compatible with the expected real PAM Alamouti scheme, reaching a rate loss of 1/3.

Fig. 7

Precoding symbols $x_1$, $x_2$ are chosen to cancel (zero) "composite" intrinsic interference :

$$y_{m_0,n_0} = H^{(1)}\underbrace{(a_1 + j\, I^{(1)}_{m_0,n_0})}_{\triangleq s_1} - H^{(2)}\underbrace{(a_2 - j\, I^{(2)}_{m_0,n_0})}_{\neq s_2^*} + \eta_{m_0,n_0} = H^{(1)}s_1 - H^{(2)}(s_2^* + j\, \overset{\to 0}{I_1}) + \eta_{m_0,n_0} \qquad I_1 \triangleq I^{(1)}_{m_0+1,n_0} - I^{(2)}_{m_0,n_0}$$

$$y_{m_0+1,n_0} = H^{(1)}\underbrace{(a_2 + j\, I^{(1)}_{m_0+1,n_0})}_{\triangleq s_2} + H^{(2)}\underbrace{(a_1 + j\, I^{(2)}_{m_0+1,n_0})}_{\neq s_1^*} + \eta_{m_0+1,n_0} = H^{(1)}s_2 + H^{(2)}(s_1^* + j\, \overset{\to 0}{I_2}) + \eta_{m_0+1,n_0} \qquad I_2 \triangleq I^{(1)}_{m_0,n_0} + I^{(2)}_{m_0+1,n_0}$$

$$\to \text{Alamouti}$$

EP 3 076 576 A1

**Description**

**FIELD OF THE INVENTION**

The present technology relates to a method and apparatus for transmitting a multicarrier signal, wherein said signal is of the offset quadrature amplitude modulation (OQAM) type comprising symbols in the time-frequency space, wherein the symbols include a data containing symbol and a precoding symbol.

**BACKGROUND OF THE INVENTION**

Transmit diversity is considered to be important since it can be applied at transmitter side to improve the reliability of communication link even if channel state information is not available at the transmitter. That includes high speed mobility scenarios where feedback information from receiver to transmitter becomes quickly obsolete and also broadcast scenarios.

Alamouti code, which is described in S. M. Alamouti: "A simple transmit diversity technique for wireless communications", IEEE Journal on Select Areas in Communications, vol. 16, no. 8, October 1998, is a popular transmit diversity scheme from orthogonal design for two transmit antennas since it has the following desired properties of:

1. Full diversity
2. Full rate (no rate loss)
3. Simple linear receiver, i.e. the processing required at the receiver scales linearly with the number of transmit antennas.

Alamouti code has been widely adopted, e.g. for LTE OFDM systems.

However, the direct application of the Alamouti scheme for FBMC/OQAM is not possible. So far, considerable amount of efforts have been spent by many industries and universities to find competitive solution for transmit diversity with FBMC/OQAM, but all the state-of-the-art solutions have some drawbacks as explained later.

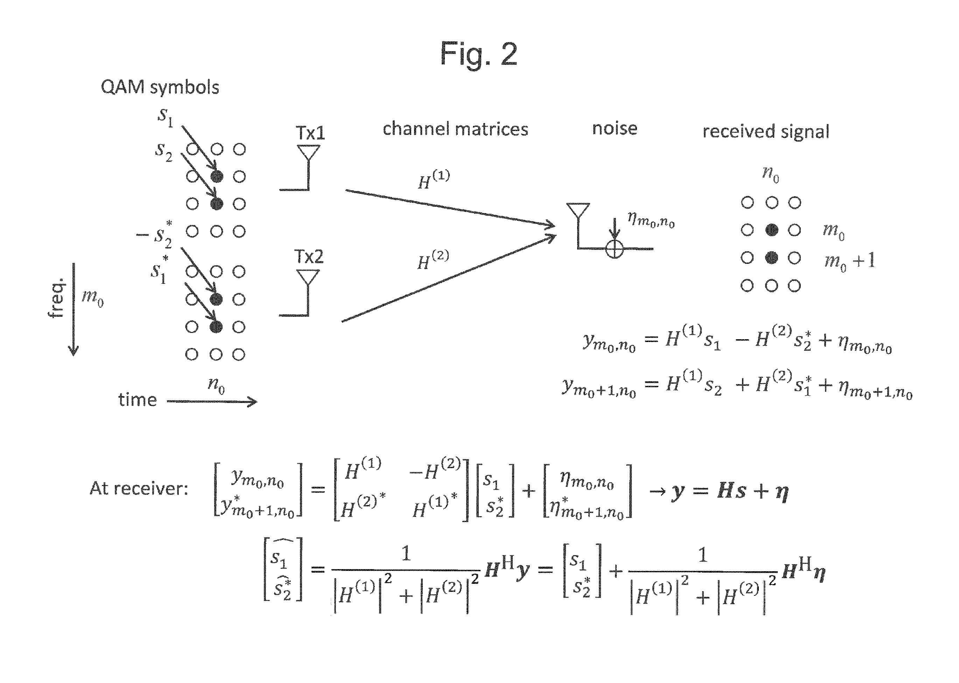

Before explaining the problem of achieving transmit diversity for FBMC/OQAM, the Alamouti transmission scheme as applied in LTE should be reviewed as illustrated in Figure 2.

Figure 2 shows a transmission scheme based on OFDM, wherein the complex QAM symbols $s_1$ and $s_2$ are transmitted from the first transmit antenna Tx1 using the two resources $(m_0, n_0)$ and $(m_0 + 1, n_0)$ where $m_0$ and $n_0$ denote subcarrier and time indices, respectively. From the second transmit antenna Tx2 the complex conjugate versions of these QAM symbols are transmitted with or without taking its minus by using the same two resources, but now the used resources for $s_1$ and $s_2$ are exchanged. If it is assumed that the complex valued channel frequency responses on subcarriers $m_0$ and $m_0 + 1$ of symbol $n_0$ are quasi equivalent, denoted as $H^{(1)}$ and $H^{(2)}$ for transmit antennas Tx1 and Tx2, respectively, one can write the received signals for the subcarriers $m_0$ and $m_0 + 1$ as shown in equations (1) and (2):

$$y_{m_0,n_0} = H^{(1)}s_1 - H^{(2)}s_2^* + \eta_{m_0,n_0} \qquad (1)$$

$$y_{m_0+1,n_0} = H^{(1)}s_2 + H^{(2)}s_1^* + \eta_{m_0+1,n_0} \qquad (2)$$

where $\eta_{m_0,n_0}$ is an AWGN. With some arrangement of these receive signals, the following linear equation system is obtained:

$$\begin{bmatrix} y_{m_0,n_0} \\ y_{m_0+1,n_0}^* \end{bmatrix} = \begin{bmatrix} H^{(1)} & -H^{(2)} \\ H^{(2)*} & H^{(1)*} \end{bmatrix} \begin{bmatrix} s_1 \\ s_2^* \end{bmatrix} + \begin{bmatrix} \eta_{m_0,n_0} \\ \eta_{m_0+1,n_0}^* \end{bmatrix} \rightarrow y = Hs + \eta \quad (3)$$

Then, at the receiver the following linear processing is performed:

$$\begin{bmatrix} \widehat{s_1} \\ \widehat{s_2^*} \end{bmatrix} = \frac{1}{\left|H^{(1)}\right|^2 + \left|H^{(2)}\right|^2} H^{\mathrm{H}} y = \begin{bmatrix} s_1 \\ s_2^* \end{bmatrix} + \frac{1}{\left|H^{(1)}\right|^2 + \left|H^{(2)}\right|^2} H^{\mathrm{H}} \eta. \qquad (4)$$

The diversity order of 2 is achieved assuming that the channel response from the transmit antennas Tx1 and Tx2 are independent.

To summarize, the main idea of Alamouti coding is that it is an orthogonal design since only linear combination is needed and it incurs no rate loss because two resources are utilized to deliver two data symbols.

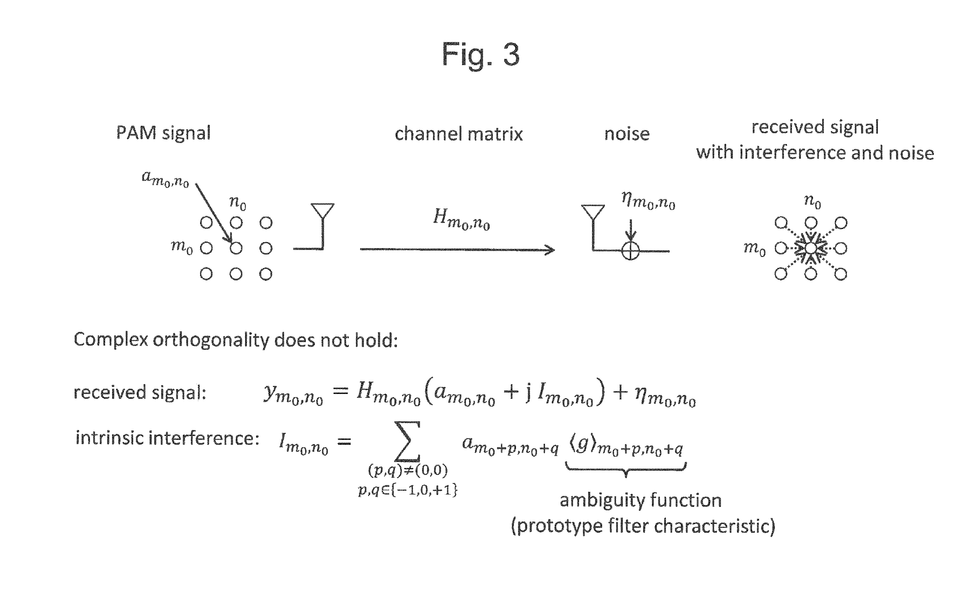

Now, fundamental properties of FBMC/OQAM that are essential for understanding why the Alamouti scheme cannot be directly applied to FBMC/OQAM will be reviewed on the basis of Figure 3. In the single antenna, single input, single output (SISO) system shown in Figure 3, a real-valued pulse amplitude modulation (PAM) signal $a_{m_0,n_0}$ is transmitted using the resource $(m_0, n_0)$.

The respective baseband equivalent receive signal may be written as

$$y_{m_0,n_0} = H_{m_0,n_0}\left(a_{m_0,n_0} + \mathrm{j}\, I_{m_0,n_0}\right) + \eta_{m_0,n_0} \qquad (5)$$

where

$$I_{m_0,n_0} = \sum_{\substack{(p,q)\neq(0,0) \\ p,q\in\{-1,0,+1\}}} a_{m_0+p,n_0+q} \left\langle g \right\rangle_{m_0+p,n_0+q} \qquad (6)$$

is the so called intrinsic interference coming from data symbols on neighbor subcarriers and symbols. The coefficients $\langle g \rangle_{m0+p,n0+q}$ are called ambiguity function that captures the characteristic of the used prototype filter. Here, it is assumed that a good localized filter is used such that the intrinsic interference is caused only by the immediate neighbor resources, but in general other resources that are located farer apart could also contribute to form the intrinsic interference.

It can be seen that the subcarrier signal is not orthogonal in the complex domain. It is, however, possible to restore the orthogonality in the real domain by channel equalization and taking its real part as

$$\hat{a}_{m_0,n_0} = \mathrm{Re}\left\{\frac{y_{m_0,n_0}}{H_{m_0,n_0}}\right\} \approx a_{m_0,n_0} + \eta'_{m_0,n_0} \qquad (7)$$

As it can be seen next, there is the consequence on the transmit diversity from the fact that FBMC/OQAM loses the complex orthogonality.

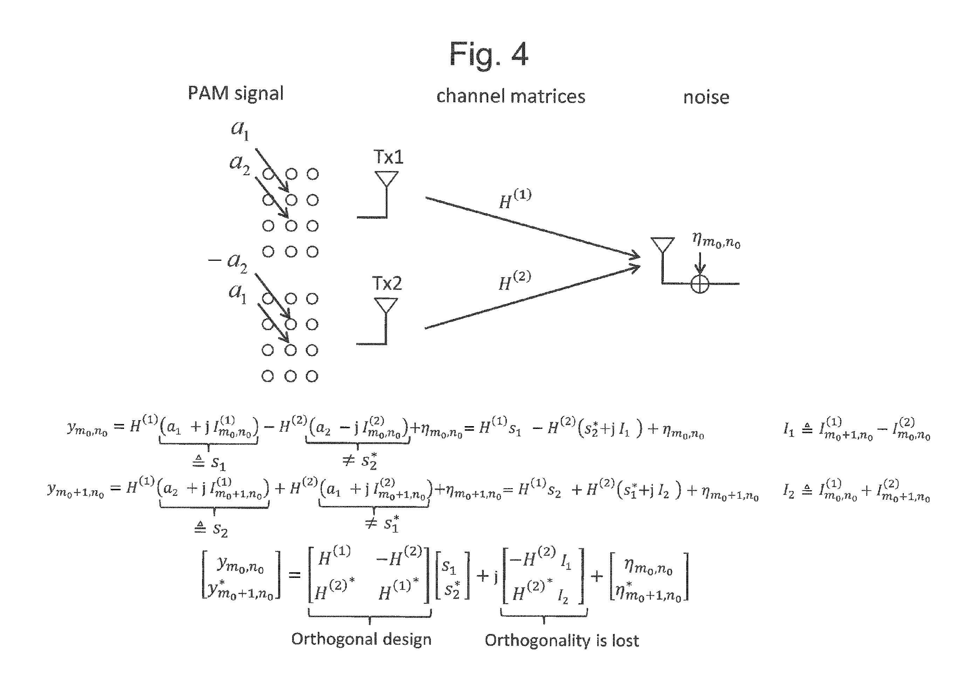

For transmit diversity for FBMC/OQAM, the system model shown in Figure 4 is considered.

In the scenario shown in Figure 4, two real-valued PAM signals $a_1$ and $a_2$ are transmitted using the two resources $(m_0, n_0)$ and $(m_0 + 1, n_0)$ from the transmit antenna Tx1. From transmit antenna Tx2, these PAM symbols are transmitted with and respectively without taking its minus by using the same two resources but now the used resources for $a_1$ and $a_2$ are exchanged as can be seen in Figure 4. With the same assumptions on $H^{(1)}$ and $H^{(2)}$ from transmit antennas Tx1 and Tx2, the receive signals for the subcarriers $m_0$ and $m_0 + 1$ read as

$$y_{m_0,n_0} = H^{(1)}\underbrace{\left(a_1 + \mathrm{j}\, I^{(1)}_{m_0,n_0}\right)}_{\triangleq\, s_1} - H^{(2)}\underbrace{\left(a_2 - \mathrm{j}\, I^{(2)}_{m_0,n_0}\right)}_{\neq\, s_2^*} + \eta_{m_0,n_0} = H^{(1)} s_1 - H^{(2)}\left(s_2^* + \mathrm{j}\, I_1\right) + \eta_{m_0,n_0} \qquad (8)$$

$$y_{m_0+1,n_0} = H^{(1)}\underbrace{\left(a_2 + \mathrm{j}\, I^{(1)}_{m_0+1,n_0}\right)}_{\triangleq\, s_2} + H^{(2)}\underbrace{\left(a_1 + \mathrm{j}\, I^{(2)}_{m_0+1,n_0}\right)}_{\neq\, s_1^*} + \eta_{m_0+1,n_0} = H^{(1)} s_2 + H^{(2)}\left(s_1^* + \mathrm{j}\, I_2\right) + \eta_{m_0+1,n_0} \qquad (9)$$

where the complex valued "virtual symbols" $s_1$ and $s_2$ are defined as the real-valued desired signal plus intrinsic interference.

In an attempt to implement the Alamouti scheme, one may introduce the following:

$$I_1 \triangleq I^{(1)}_{m_0+1, n_0} - I^{(2)}_{m_0, n_0} \tag{10}$$

$$I_2 \triangleq I^{(1)}_{m_0, n_0} + I^{(2)}_{m_0+1, n_0} \tag{11}$$

With some arrangement of these received signals, the following linear equation system is obtained in a similar way as the Alamouti scheme for OFDM as explained above:

$$\begin{bmatrix} y_{m_0,n_0} \\ y^*_{m_0+1,n_0} \end{bmatrix} = \underbrace{\begin{bmatrix} H^{(1)} & -H^{(2)} \\ H^{(2)^*} & H^{(1)^*} \end{bmatrix}}_{\text{Orthogonal design}} \begin{bmatrix} s_1 \\ s^*_2 \end{bmatrix} + j \underbrace{\begin{bmatrix} -H^{(2)} I_1 \\ H^{(2)^*} I_2 \end{bmatrix}}_{\text{Orthogonality is lost}} + \begin{bmatrix} \eta_{m_0,n_0} \\ \eta^*_{m_0+1,n_0} \end{bmatrix} \tag{12}$$

It can however be observed that the orthogonality is lost due to the second term on the right hand side of the equation system. The main reason for this is that the intrinsic interferences for the transmitted signals from different antennas are not equivalent since the surrounding data of each time-frequency resource grid are different due to the random nature of data signals. This explains the problem that the transmit diversity from the orthogonal design following the Alamouti coding scheme cannot be applied to FBMC/OQAM in a straightforward manner.

Several attempts to address this problem of non-orthogonality can be found in the literature and will be discussed in the following:

In M. Bellanger, "Transmit diversity in multicarrier transmission using OQAM modulation," in Proc. The 3rd Int. Symposium on Wireless Pervasive Computing (ISWPC'08), pp. 727-730, May 2008, the author proposes a simple delay diversity where no effort is made to realize orthogonality. Although this approach does not have any rate loss, due to its non-orthogonality, it requires very complex maximum likelihood receiver and it does not achieve full diversity.

The authors in H. Lin, C. Lele, P. Siohan, "A pseudo Alamouti transceiver design for OFDM/OQAM modulation with cyclic prefix," in Proc. SPAWC, 2009 propose to introduce a cyclic prefix which is common for OFDM, but not for FBMC/OQAM. Because of the cyclic prefix, the orthogonality can be realized, but it results in a rate loss.

Another approach, presented in by C. Lele, P. Siohan, R. Legouable, "The Alamouti scheme with CDMA-OFDM/OQAM", EURASIP Journal on Advances in Signal Processing, 2010, suggests the spreading and dispreading using Walsh-Hadamard codes for nullifying intrinsic interferences. Thanks to spreading/dispreading, orthogonality can be achieved, but a rate loss results.

In M. Renfors, T. Ihalainen, T. H. Stitz, "A Block-Alamouti Scheme for Filter Bank Based Multicarrier Transmission," Proceedings of the European Wireless Conference 2010, a block Alamouti scheme using some zero symbols is introduced based on orthogonal design. The idea is to apply the Alamouti scheme to two areas of symbols instead of two symbols such that the intrinsic interference caused from 2 different transmit antennas are equivalent. Some zero symbols are added around the areas to avoid "edge effect". The zero symbols lead to rate loss. Besides, the applicability of the scheme may be limited since channel has to be constant over blocks that may not hold for many propagation scenarios, e.g. for mobile scenarios.

To summarize, there has not been any solution in the literature that can realize the orthogonal design without rate loss.

## SUMMARY OF THE INVENTION

According to one embodiment, there is provided a method for transmitting a multicarrier signal, wherein said signal is of the offset quadrature amplitude modulation, OQAM, type comprising symbols in the time-frequency space, wherein the symbols include one of a data containing symbol and a precoding symbol, wherein the method is characterized in that the precoding symbol is selected such that intrinsic interference at the data containing symbol, when received by a receiver, is forced to a value of an applied space-time or space-frequency code.

This has the effect and advantage that a real-valued symbol can be transmitted to the receiver without the intrinsic interference (orthogonal design) or with the reduced amount of intrinsic interference (quasi-orthogonal design).

In one embodiment, said symbols are formed by modulating a real-valued symbol and the intrinsic interference corresponds to the imaginary part of the demodulated signal at the receiver, or said symbols are formed by modulating an imaginary valued symbol and the intrinsic interference corresponds to the real-valued part of the demodulated signal at the receiver.

In one embodiment, the selecting of the precoding symbol is performed by forcing the intrinsic interference such that an orthogonal space-time or space-frequency code is formed.

Thereby, orthogonality means that the intrinsic interference at the data containing symbol, when received by the receiver, is forced to zero when applying the space-time or space-frequency code.

This has the advantage that the transmission scheme is orthogonal and thus demodulation of the signals in case of transmit diversity may have only linear complexity in the number of antennas. This has the further effect and advantage that orthogonality of the coding is achieved so that transmit diversity according to the scheme of Alamouti may be applied.

In one embodiment, the selecting of the precoding symbol is performed by forcing the intrinsic interference, when received by the receiver, to be zero.

This has the effect and advantage that the intrinsic interference need not be considered when demodulating a transmitted symbol from a subcarrier used for data transmission.

In one embodiment all resources are taken into account for computing the intrinsic interference and the precoding symbol is designed to null the intrinsic interference that results in the orthogonal design since no intrinsic interference may be observed at the receiver.

This has the advantage that the performance does not degrade and the receiver does not need to perform any further processing to cancel the remaining intrinsic interference.

In one embodiment, the selecting of the precoding symbol is performed by forcing the intrinsic interference such that a quasi-orthogonal space-time or space-frequency code is formed.

We denote by quasi-orthogonality that the intrinsic interference at the data containing symbol, when received by the receiver, is forced to a small non-zero value when applying the space-time or space-frequency code. Thereby "small" means a value below a predefined non-zero value, which can be a threshold system parameter, which is configurable.

The further effect of the quasi-orthogonal design is that there can remain a certain intrinsic interference at the receiver, which, however, may be either small enough that it could be negligible for performance degradation or the receiver may be able to cancel it by an interference cancellation means such as successive interference cancellation. This has advantages that complexity for computing the precoding symbol and/or transmit energy can be reduced because the constraints on the precoding symbol calculation are relaxed.

In one embodiment, the precoding symbol is designed to null the intrinsic interference defined in (6). This can result in the quasi-orthogonal design since there may be certain remaining intrinsic interference when received at the receiver. This is because the intrinsic interference defined in (6) take into account only the immediate neighbour resources.

In one embodiment, the precoding symbol is designed to null the intrinsic interference originating from a subset of resources. In one further embodiment, resources are selected according to the significances determined by the ambiguity functions of the filter used.

This has advantage of taking into account only the resources that cause the most significant intrinsic interferences in an efficient manner. This can result in the quasi-orthogonal design since there may be certain remaining intrinsic interference when received at the receiver.

In one embodiment the selecting of the precoding symbol is performed by forcing the intrinsic interference, when received by a receiver, to be a smaller than a predefined non-zero value. The value may also be one of a predefined set of values which can be a threshold system parameter, which is configurable and may be specified in a standardization specification.

In one embodiment, the offset quadrature amplitude modulation is applied with the filter bank multicarrier FBMC.

This has the effect and advantage that transmit diversity according to the scheme of Alamouti may be applied to a FBMC transmission scheme.

In one embodiment, the data is contained on the real part of the demodulated signal.

In one embodiment, two real-valued pulse amplitude modulation PAM symbols $a_1$, $a_2$ are to be transmitted, wherein data containing symbols $a_1$, $a_2$ are transmitted using resources $(m_0, n_0)$ and $(m_0 + u, n_0 + v)$ in the time-frequency domain by the first antenna; and wherein data containing symbols $-a_2$, $a_1$, are transmitted using resources $(m_0, n_0)$ and $(m_0 + u, n_0 + v)$ in the time-frequency domain by the second antenna, wherein $u$, $v$ are non-zero.

This has the effect and advantage that the quality of the transmission from a transmitter using two antennas to a receiver using one antenna may be improved following a transmit diversity scheme related to the scheme of Alamouti.

In one embodiment, two real-valued pulse amplitude modulation PAM symbols $a_1$, $a_2$ are to be transmitted, wherein data containing symbols $a_1$, $a_2$ are transmitted using resources $(m_0, n_0)$ and $(m_0 + u, n_0)$ in the time-frequency domain by the first antenna, wherein data containing symbols $-a_2$, $a_1$, are transmitted using resources $(m_0, n_0)$ and $(m_0 + u, n_0)$ in the time-frequency domain by the second antenna, and wherein $u$ is non-zero.

This has the effect and advantage that the quality of the transmission from a transmitter using multiple antennas to a receiver may be improved following a transmit diversity scheme of Alamouti.

In one embodiment, two real-valued pulse amplitude modulation PAM symbols $a_1$, $a_2$ are to be transmitted, wherein data containing symbols $a_1$, $a_2$ are transmitted using resources $(m_0, n_0)$ and $(m_0, n_0 + u)$ in the time-frequency domain by the first antenna; wherein data containing symbols $-a_2$, $a_1$, are transmitted using resources $(m_0, n_0)$ and $(m_0, n_0 + u)$ in the time-frequency domain by the second antenna, and wherein $u$ is non-zero.

This has the effect and advantage that the quality of the transmission from a transmitter using multiple antennas to a receiver may be improved following a transmit diversity scheme of Alamouti.

According to one embodiment, two precoding symbols are used for the PAM symbols transmitted by the first antenna and two precoding symbols are used for the PAM symbols transmitted by the second antenna, wherein each of the precoding symbols are selected such as to force the intrinsic interference at each resource used to transmit the PAM symbols, when received by a receiver, to be zero.

This has the advantage that a coding rate of 1/2 may be achieved, since in each antenna, for two data symbols to be transmitted, two precoding symbols are transmitted.

According to one embodiment, one precoding symbol is used for each transmitted symbol to cancel out the composite intrinsic interference through transmission of the same PAM symbol by the two antennas, when received by a receiver, to be zero.

This has the advantage that the coding rate may be improved to 2/3, since in each antenna, for two data symbols to be transmitted, only one precoding symbols is to be transmitted.

According to an embodiment, a receiving method for demodulating a signal transmitted by the transmission method according to one of preceding embodiments for transmitting a multicarrier signal provided, wherein the received signal is processed by a linear diversity combining for the space-time or space-frequency code and by taking the real part of the output.

According to an embodiment, there is provided an apparatus for transmitting a multicarrier signal that is adapted to carry out the method according to the embodiments described previously.

The effects and advantages achieved by the apparatus correspond to the effects and advantages of the embodiments of the method which have been described in detail above.

## DESCRIPTION OF THE DRAWINGS

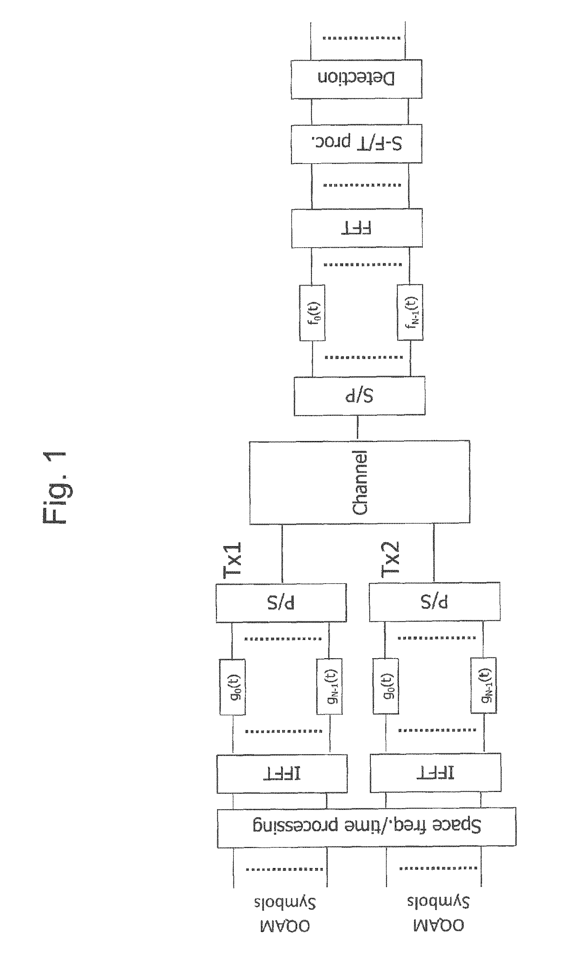

Figure 1 shows the architecture of an FBMC/OQAM transmission scheme with transmit diversity using two transmit antennas.

Figure 2 show an Alamouti scheme for transmit diversity as for example used in LTE.

Figure 3 shows a single input, single output channel model where a PAM signal is transmitted through a single transmit antenna based on FBMC/OQAM.

Figure 4 shows a transmission scheme with two transmit antennas based on FBMC/OQAM where orthogonally is lost through intrinsic interference.

Figure 5 shows an orthogonal transmission scheme with transmit diversity through two transmit antennas based on FBMC/OQAM where intrinsic interference is cancelled using one precoding symbol per PAM signal.

Figure 6 shows the principle of transmitting one PAM symbol using two resources.

Figure 7 shows an orthogonal transmission scheme with transmit diversity through two transmit antennas based on FBMC/OQAM where the "composite" intrinsic interference is cancelled using one precoding symbol for each pair of PAM signals.

**DETAILED DESCRIPTION**

At first, some terms used in the description will be defined in the following list of abbreviations.

AWGN    Additive White Gaussian Noise
FBMC    Filter Bank Multicarrier
LTE     Long Term Evolution (mobile phone standard)
OFDM    Orthogonal Frequency Division Multiplexing
OQAM    Offset Quadrature Amplitude Modulation
PAM     Pulse Amplitude Modulation
QAM     Quadrature Amplitude Modulation
SISO    Single-In-Single-Out

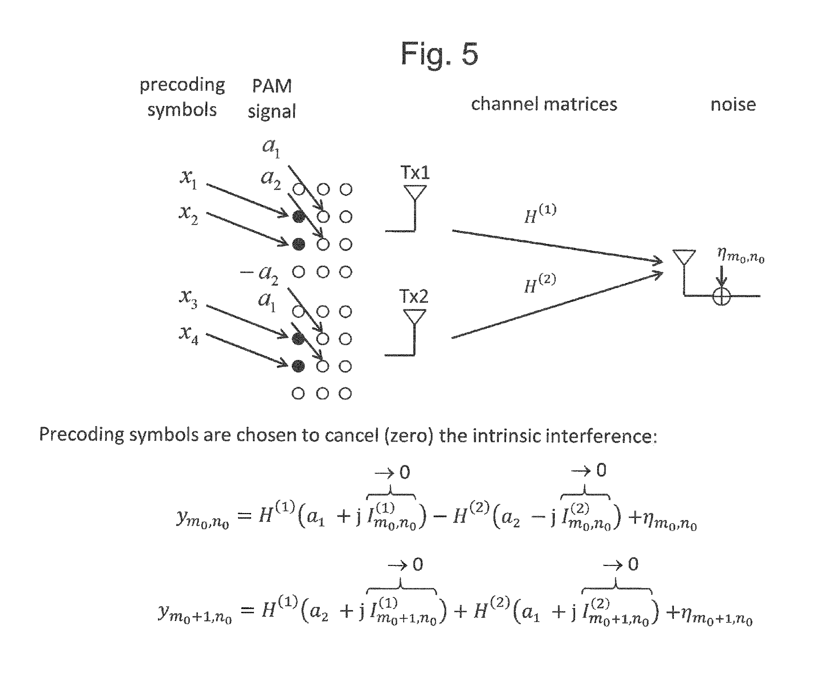

The invention is concerned with filter bank multicarrier (FBMC) offset quadrature amplitude modulation (OQAM) transmission with the so called transmit diversity technique using two transmit antennas as illustrated in Figure 4.
One objective is to design a transmit diversity scheme from orthogonal design for FBMC/OQAM similar to the above described Alamouti scheme, which is for example, applied to LTE OFDM system.
A first embodiment is illustrated in Figure 5. In this approach orthogonality is achieved in a FBMC/OCAM transmission scheme. In this figure, four precoding symbols are introduced, i.e., two precoding symbols for each transmit antenna.
In the first embodiment, these precoding symbols are chosen such as to cancel the intrinsic interferences as follows:

$$
y_{m_0,n_0} = H^{(1)}\Big(a_1 + j\,\overbrace{I_{m_0,n_0}^{(1)}}^{\to 0}\Big) - H^{(2)}\Big(a_2 - j\,\overbrace{I_{m_0,n_0}^{(2)}}^{\to 0}\Big) + \eta_{m_0,n_0}
$$

$$
y_{m_0+1,n_0} = H^{(1)}\Big(a_2 + j\,\overbrace{I_{m_0+1,n_0}^{(1)}}^{\to 0}\Big) + H^{(2)}\Big(a_1 + j\,\overbrace{I_{m_0+1,n_0}^{(2)}}^{\to 0}\Big) + \eta_{m_0+1,n_0} \tag{13}
$$

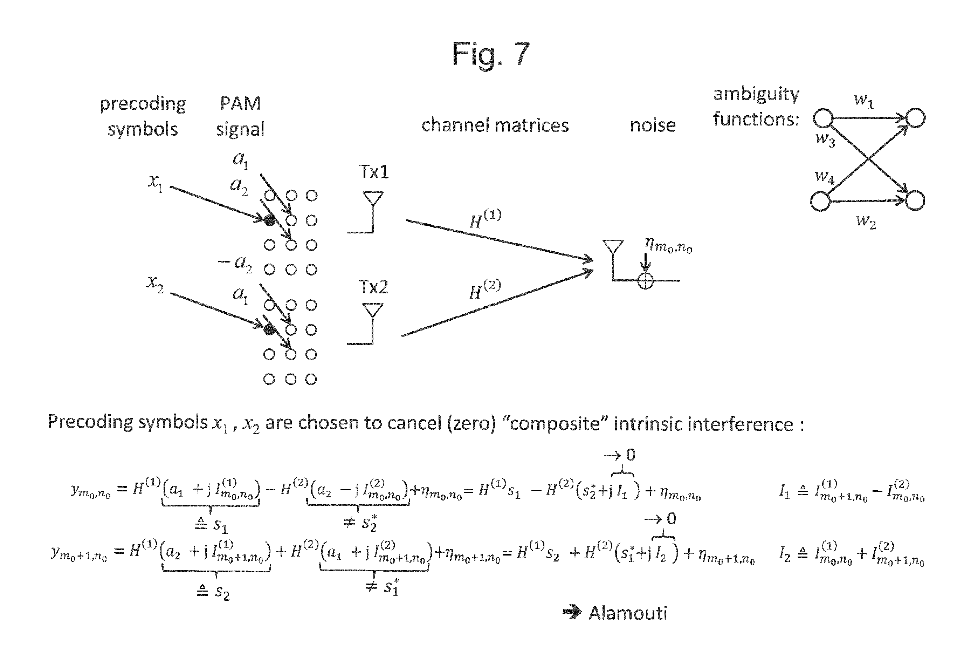

Here, $y_{m_0,n_0}$ is the received signal at the resource at $(m_0, n_0)$ in the time-frequency domain, $\eta_{m_0,n_0}$ is AWGN and $I_{m_0,n_0}^{(1)}$ and $I_{m_0,n_0}^{(2)}$ being the intrinsic interference from the first and the second antenna at resource $(m_0, n_0)$ respectively. The precoding symbols $x_1$, $x_2$, $x_3$, $x_4$ are chosen to cancel (zero) the intrinsic interference individually for each antenna. Specifically, the symbols $x_1$, $x_2$ are chosen to cancel the intrinsic interferences $I_{m_0,n_0}^{(1)}$ $I_{m_0+1,n_0}^{(1)}$ of the first antenna and $x_3$, $x_4$ are chosen to cancel the intrinsic interferences $I_{m_0,n_0}^{(2)}$ $I_{m_0+1,n_0}^{(2)}$ of the second antenna.
The first embodiment leads to an orthogonal design and achieves a code rate of 1/2, i.e. the transmission of one data symbol requires two time units since one precoding symbol is transmitted per data symbol.

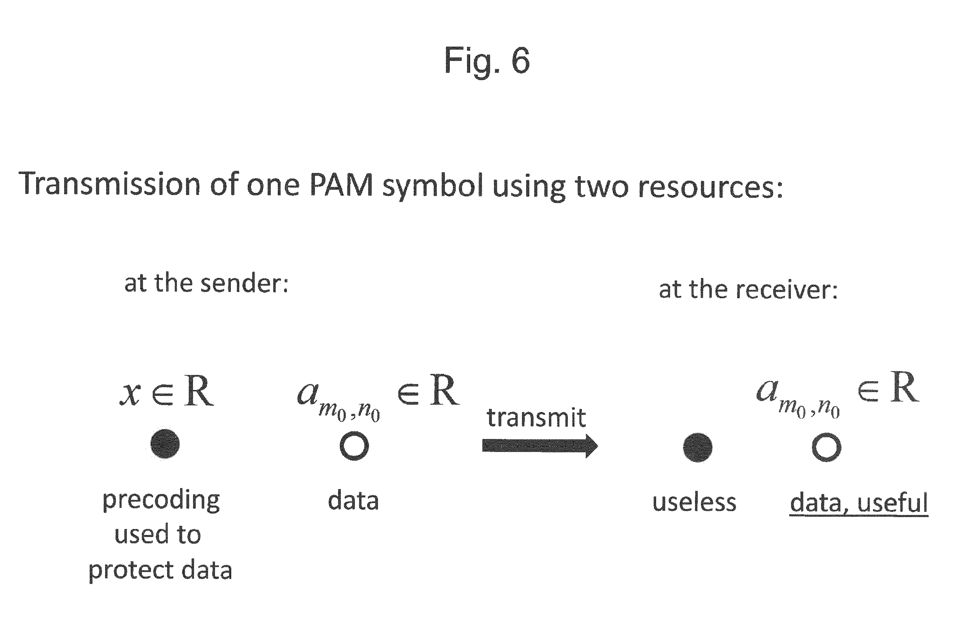

Figure 6 shows only two transmission resources and only a single antenna is considered for simplicity. In the approaches discussed so far, one of the resources is used for sending the precoding signal that is intended to protect useful data sent using another resource to somewhat "combat" with pure imaginary intrinsic interference observed at the receiver. This means that one real-valued PAM symbol is transmitted using two resources. Hence Figure 6 illustrates this principle of using a precoding symbol $x$ to "protect" a real-valued data symbol $a$ to be transmitted, wherein the precoding symbol serves to cancel out intrinsic interference and the value received at the resource used for transmission of the precoding symbol is not otherwise used ("useless") at the receiver side.
A second embodiment is illustrated in Figure 7. Compared to the first embodiment described above, the second embodiment improves the coding rate is from 1/2 to 2/3. In the second embodiment, only one precoding symbol is used for each transmit antenna.

The precoding symbols in the second embodiment are chosen to cancel out the so called "composite intrinsic interference", which can be defined as

$$I_1 \triangleq I^{(1)}_{m_0+1, n_0} - I^{(2)}_{m_0, n_0} \qquad (14)$$

$$I_2 \triangleq I^{(1)}_{m_0, n_0} + I^{(2)}_{m_0+1, n_0} \qquad (15)$$

See also the previous attempt to implement the Alamouti scheme, specifically equations (10) and (11). The term "composite" thereby relates to the combination of two intrinsic interferences, wherein each of the two intrinsic interferences is obtained at the receiver at one transmission resource and being caused by neighboring resources of said one transmission resource transmitted by one of two antennas, and wherein each of said two intrinsic interference being caused by the transmission of neighboring resources by one of two antennas.

To illustrate this, the same development of the received signal as in Figure 4 is used as follows:

$$y_{m_0, n_0} = H^{(1)} \overbrace{\left(a_1 + j I^{(1)}_{m_0, n_0}\right)}^{\triangleq s_1} - H^{(2)} \overbrace{\left(a_2 - j I^{(2)}_{m_0, n_0}\right)}^{\neq s_2^*} + \eta_{m_0, n_0}$$

$$= H^{(1)} s_1 - H^{(2)} \left(s_2^* + j \underbrace{I_1}_{\to 0}\right) + \eta_{m_0, n_0}$$

$$y_{m_0+1, n_0} = H^{(1)} \overbrace{\left(a_2 + j I^{(1)}_{m_0+1, n_0}\right)}^{\triangleq s_2} + H^{(2)} \overbrace{\left(a_1 + j I^{(2)}_{m_0+1, n_0}\right)}^{\neq s_1^*} + \eta_{m_0+1, n_0}$$

$$= H^{(1)} s_2 + H^{(2)} \left(s_1^* + j \underbrace{I_2}_{\to 0}\right) + \eta_{m_0+1, n_0}$$

$$(16)$$

If the precoding symbols are selected so that the composite interference $I_1$ and $I_2$ is cancelled, one obtains an orthogonal design and can apply the simple linear processing as the Alamouti scheme for OFDM to obtain

$$\begin{bmatrix} \widehat{s_1} \\ \widehat{s_2^*} \end{bmatrix} = \frac{1}{\left|H^{(1)}\right|^2 + \left|H^{(2)}\right|^2} H^H y = \begin{bmatrix} s_1 \\ s_2^* \end{bmatrix} + \frac{1}{\left|H^{(1)}\right|^2 + \left|H^{(2)}\right|^2} H^H \eta. \qquad (17)$$

It is noted that the outcomes are estimates $\widehat{s_1}$ and $\widehat{s_2}$ of the complex valued "virtual symbols" $s_1$ and $s_2$ that are real-valued desired signal plus intrinsic interference. Thus, the real-valued desired signals are recovered from the complex estimates as

$$\hat{a}_1 = Re\{\hat{s}_1\} \text{ and}$$

$$\hat{a}_2 = Re\{\hat{s}_2\}. \tag{18}$$

To elaborate in detail further, when applying the precoding symbols $x_1$ and $x_2$, and when considering the ambiguity functions shown in Figure 7 that reflect the interference from neighbouring transmission resources, (16) may be rewritten as:

$$y_{m_0,n_0} = H^{(1)}\left(s_1^R + j\left(w_1 x_1 + I_{m_0,n_0}^{(1)''}\right)\right) - H^{(2)}\left(s_2^R - j\left(w_1 x_2 + \right.\right.$$

$$\left.\left. I_{m_0,n_0}^{(2)''}\right)\right) + \eta_{m_0,n_0}$$

$$y_{m_0+1,n_0} = H^{(1)}\left(s_2^R + j\left(w_3 x_1 + I_{m_0+1,n_0}^{(1)''}\right)\right) + H^{(2)}\left(s_1^R + j\left(w_3 x_2 + \right.\right.$$

$$\left.\left. I_{m_0+1,n_0}^{(2)''}\right)\right) + \eta_{m_0+1,n_0} \tag{19}$$

where

$$I_{m_0,n_0}^{(1)''} = I_{m_0,n_0}^{(1)} - w_1 x_1$$

$$I_{m_0,n_0}^{(2)''} = I_{m_0,n_0}^{(2)} - w_1 x_2$$

$$I_{m_0+1,n_0}^{(1)''} = I_{m_0+1,n_0}^{(1)} - w_3 x_1$$

$$I_{m_0+1,n_0}^{(2)''} = I_{m_0+1,n_0}^{(2)} - w_3 x_2 \tag{20}$$

Then, the receive signals can be further rewritten as

$$y_{m_0,n_0} = H^{(1)} s_1 - H^{(2)}\left(s_2^* + jI_1\right) + \eta_{m_0,n_0}$$

$$y_{m_0+1,n_0} = H^{(1)} s_2 + H^{(2)}\left(s_1^* + jI_2\right) + \eta_{m_0+1,n_0} \tag{21}$$

where $s_1$ and $s_1$ are defined as

$$s_1 = s_1^R + j\left(w_1 x_1 + I_{m_0,n_0}^{(1)''}\right)$$

$$s_2 = s_2^R + j\left(w_3 x_1 + I_{m_0+1,n_0}^{(1)''}\right) \tag{22}$$

and also

$$I_1 = I^{(1)''}_{m_0+1,\,n_0} - I^{(2)''}_{m_0,\,n_0} = I^{(1)}_{m_0,n_0} - I^{(2)}_{m_0,n_0} - w_1 x_1 + w_1 x_2$$

$$I_2 = I^{(1)''}_{m_0,\,n_0} + I^{(2)''}_{m_0+1,\,n_0} = I^{(1)}_{m_0+1,n_0} + I^{(2)}_{m_0+1,n_0} - w_3 x_1 - w_3 x_2 \qquad (23)$$

The constraints are then $I_1 = I_2 = 0$, which can be written as

$$\begin{bmatrix} w_1 & -w_1 \\ w_3 & w_3 \end{bmatrix} \begin{bmatrix} x_1 \\ x_2 \end{bmatrix} = \begin{bmatrix} I^{(1)}_{m_0,n_0} - I^{(2)}_{m_0,n_0} \\ I^{(1)}_{m_0+1,n_0} + I^{(2)}_{m_0+1,n_0} \end{bmatrix} \qquad (24)$$

This equation system can be easily solved to get the desired precoding symbols $x_1$ and $x_2$ that satisfy the constraints. And it reduces to the equivalent Alamouti system in (1) and (2). Then, with the additional steps in (17) and (18) the desired signals can be demodulated.

The advantage of the technology according to the embodiments presented herein is the ability to realize transmit diversity from the orthogonal design with full diversity, i.e. diversity order of 2 for two transmit antennas. The embodiments differ e.g. in their effectiveness to exploit available channel resources for the transmission of data symbols (rate loss).

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computing device acting as a network entity.

**Claims**

1. A method for transmitting a multicarrier signal,
   wherein said signal is of the offset quadrature amplitude modulation, OQAM, type comprising symbols in the time-frequency space,
   wherein the symbols include

   - a data containing symbol and
   - a precoding symbol,

   the method being **characterized in that**
   the precoding symbol is selected such that intrinsic interference at the data containing symbol, when received by a receiver, is forced to a value which ensures an applied space-time or space-frequency code.

2. The transmission method of claim 1, wherein said symbols are formed by modulating a real-valued symbol and the intrinsic interference corresponds to the imaginary part of the demodulated signal at said receiver, or said symbols are formed by modulating an imaginary valued symbol and the intrinsic interference corresponds to the real-valued part of the demodulated signal at said receiver.

3. The transmission method according to one of the previous claims, wherein one precoding symbol is used for each transmitted symbol to cancel out the composite intrinsic interference through transmission of the same PAM symbol by the two antennas, when received by a receiver, to be zero.

4. The transmission method of one of the previous claims, wherein the selecting of the precoding symbol is performed by forcing the intrinsic interference such that an orthogonal space-time or space-frequency code is formed.

5. The transmission method of one of the previous claims, wherein the selecting of the precoding symbol is performed by forcing the intrinsic interference, when received by the receiver, to be zero.

6. The transmission method according to claims 1, 2, or 3, wherein the selecting of the precoding symbol is performed by forcing the intrinsic interference such that a quasi-orthogonal space-time or space-frequency code is formed.

7. The transmission method according to claims 1, 2, 3, or 6, wherein the selecting of the precoding symbol is performed by forcing the intrinsic interference, when received by a receiver, to be a smaller than a predefined non-zero value.

8. The transmission method of one of the previous claims, wherein said offset quadrature amplitude modulation is applied with the filterbank multicarrier FBMC.

9. The transmission method according to one of the previous claims wherein data is contained on the real part of the demodulated signal.

10. The transmission method of one of the previous claims,
wherein two real-valued pulse amplitude modulation PAM symbols $a_1$, $a_2$ are to be transmitted,
wherein data containing symbols $a_1$, $a_2$ are transmitted using resources $(m_0, n_0)$ and $(m_0 + u, n_0 + v)$ in the time-frequency domain by the first antenna;
wherein data containing symbols $-a_2$, $a_1$, are transmitted using resources $(m_0, n_0)$ and $(m_0 + u, n_0 + v)$ in the time-frequency domain by the second antenna; and
wherein $u$, $v$ are non-zero.

11. The transmission method of one of claims 1 to 9,
wherein two real-valued pulse amplitude modulation PAM symbols $a_1$, $a_2$ are to be transmitted,
wherein data containing symbols $a_1$, $a_2$ are transmitted using resources $(m_0, n_0)$ and $(m_0 + u, n_0)$ in the time-frequency domain by the first antenna;
wherein data containing symbols $-a_2$, $a_1$, are transmitted using resources $(m_0, n_0)$ and $(m_0 + u, n_0)$ in the time-frequency domain by the second antenna; and
wherein $u$ is non-zero.

12. The transmission method of one of claims 1 to 9,
wherein two real-valued pulse amplitude modulation PAM symbols $a_1$, $a_2$ are to be transmitted,
wherein data containing symbols $a_1$, $a_2$ are transmitted using resources $(m_0, n_0)$ and $(m_0, n_0 + u)$ in the time-frequency domain by the first antenna;
wherein data containing symbols $-a_2$, $a_1$, are transmitted using resources $(m_0, n_0)$ and $(m_0, n_0 + u)$ in the time-frequency domain by the second antenna; and
wherein $u$ is non-zero.

13. The transmission method according to one of claims 10 to 12, wherein two precoding symbols are used for the PAM symbols transmitted by the first antenna and two precoding symbols are used for the PAM symbols transmitted by the second antenna, wherein each of the precoding symbols are selected such as to force the intrinsic interference at each resource used to transmit the PAM symbols, when received by a receiver, to be zero.

14. A receiving method for demodulating a signal transmitted by the transmission method according to one of claims 1 to 13, wherein the received signal is processed by a linear diversity combining for the space-time or space-frequency code and by taking the real part of the output.

15. An apparatus for transmitting a multicarrier signal that is adapted to carry out the method according to one of claims 1 to 13.

**Amended claims in accordance with Rule 137(2) EPC.**

1. A method for transmitting a multicarrier signal using a transmit diversity technique with a plurality of transmit antennas (Tx1, Tx2),
wherein said signal is of the offset quadrature amplitude modulation, OQAM, type comprising symbols in the time-frequency space,
wherein the symbols include

- a data containing symbol (a) and

- a precoding symbol (x),

the method being **characterized in that**
the precoding symbol (x) is selected such that intrinsic interference (l) at the data containing symbol (a), when received by a receiver, is forced to a value which ensures an applied orthogonal space-time or space-frequency code.

2.  The transmission method of claim 1, wherein said symbols are formed by modulating a real-valued symbol and the intrinsic interference corresponds to the imaginary part of the demodulated signal at said receiver, or

   said symbols are formed by modulating an imaginary valued symbol and the intrinsic interference corresponds to the real-valued part of the demodulated signal at said receiver.

3.  The transmission method according to one of the previous claims, wherein one precoding symbol is used for each transmitted symbol to cancel out the composite intrinsic interference through transmission of the same PAM symbol by the two antennas, when received by a receiver, to be zero.

4.  The transmission method of one of the previous claims, wherein the selecting of the precoding symbol is performed by forcing the intrinsic interference, when received by the receiver, to be zero.

5.  The transmission method according to claims 1, 2, 3, or 4, wherein the selecting of the precoding symbol is performed by forcing the intrinsic interference, when received by a receiver, to be a smaller than a predefined non-zero value.

6.  The transmission method of one of the previous claims, wherein said offset quadrature amplitude modulation is applied with the filterbank multicarrier FBMC.

7.  The transmission method according to one of the previous claims wherein data is contained on the real part of the demodulated signal.

8.  The transmission method of one of the previous claims,
   wherein two real-valued pulse amplitude modulation PAM symbols $a_1$, $a_2$ are to be transmitted,
   wherein data containing symbols $a_1$, $a_2$ are transmitted using resources $(m_0, n_0)$ and $(m_0 + u, n_0 + v)$ in the time-frequency domain by the first antenna;
   wherein data containing symbols $-a_2$, $a_1$, are transmitted using resources $(m_0, no)$ and $(m_0 + u, n_0 + v)$ in the time-frequency domain by the second antenna; and
   wherein u, $v$ are non-zero.

9.  The transmission method of one of claims 1 to 7,
   wherein two real-valued pulse amplitude modulation PAM symbols $a_1$, $a_2$ are to be transmitted,
   wherein data containing symbols $a_1$, $a_2$ are transmitted using resources $(m_0, n_0)$ and $(m_0 + u, n_0)$ in the time-frequency domain by the first antenna;
   wherein data containing symbols $-a_2$, $a_1$, are transmitted using resources $(m_0, n_0)$ and $(m_0 + u, n_0)$ in the time-frequency domain by the second antenna; and
   wherein u is non-zero.

10. The transmission method of one of claims 1 to 7,
   wherein two real-valued pulse amplitude modulation PAM symbols $a_1$, $a_2$ are to be transmitted,
   wherein data containing symbols $a_1$, $a_2$ are transmitted using resources $(m_0, n_0)$ and $(m_0, no + u)$ in the time-frequency domain by the first antenna;
   wherein data containing symbols $-a_2$, $a_1$, are transmitted using resources $(m_0, n_0)$ and $(m_0, n_0 + u)$ in the time-frequency domain by the second antenna; and
   wherein u is non-zero.

11. The transmission method according to one of claims 8 to 10, wherein two precoding symbols are used for the PAM symbols transmitted by the first antenna and two precoding symbols are used for the PAM symbols transmitted by the second antenna, wherein each of the precoding symbols are selected such as to force the intrinsic interference at each resource used to transmit the PAM symbols, when received by a receiver, to be zero.

12. An apparatus for transmitting a multicarrier signal using a transmit diversity technique with a plurality of transmit antennas (Tx1, Tx2),
wherein the apparatus is adapted to carry out the method according to one of claims 1 to 11.

Fig. 1

## Fig. 2

QAM symbols

$s_1$

$s_2$

$-s_2^*$

$s_1^*$

freq. $m_0$

time $\quad n_0$

Tx1

Tx2

channel matrices

$H^{(1)}$

$H^{(2)}$

noise

$\eta_{m_0,n_0}$

received signal

$n_0$

$m_0$

$m_0+1$

$$y_{m_0,n_0} = H^{(1)}s_1 - H^{(2)}s_2^* + \eta_{m_0,n_0}$$

$$y_{m_0+1,n_0} = H^{(1)}s_2 + H^{(2)}s_1^* + \eta_{m_0+1,n_0}$$

At receiver:

$$\begin{bmatrix} y_{m_0,n_0} \\ y_{m_0+1,n_0}^* \end{bmatrix} = \begin{bmatrix} H^{(1)} & -H^{(2)} \\ H^{(2)*} & H^{(1)*} \end{bmatrix} \begin{bmatrix} s_1 \\ s_2^* \end{bmatrix} + \begin{bmatrix} \eta_{m_0,n_0} \\ \eta_{m_0+1,n_0}^* \end{bmatrix} \rightarrow \boldsymbol{y} = \boldsymbol{H}\boldsymbol{s} + \boldsymbol{\eta}$$

$$\begin{bmatrix} \widehat{s_1} \\ \widehat{s_2^*} \end{bmatrix} = \frac{1}{\left|H^{(1)}\right|^2 + \left|H^{(2)}\right|^2} \boldsymbol{H}^{\mathrm{H}}\boldsymbol{y} = \begin{bmatrix} s_1 \\ s_2^* \end{bmatrix} + \frac{1}{\left|H^{(1)}\right|^2 + \left|H^{(2)}\right|^2} \boldsymbol{H}^{\mathrm{H}}\boldsymbol{\eta}$$

# Fig. 3

PAM signal           channel matrix       noise      received signal
with interference and noise

Complex orthogonality does not hold:

received signal:
$$y_{m_0,n_0} = H_{m_0,n_0}\left(a_{m_0,n_0} + j\, I_{m_0,n_0}\right) + \eta_{m_0,n_0}$$

intrinsic interference:
$$I_{m_0,n_0} = \sum_{\substack{(p,q)\neq(0,0) \\ p,q\in\{-1,0,+1\}}} a_{m_0+p,n_0+q}\, \underbrace{\langle g\rangle_{m_0+p,n_0+q}}_{\substack{\text{ambiguity function} \\ \text{(prototype filter characteristic)}}}$$

EP 3 076 576 A1

# Fig. 4

PAM signal           channel matrices        noise

$$y_{m_0,n_0} = H^{(1)}\underbrace{\left(a_1 + j\, I^{(1)}_{m_0,n_0}\right)}_{\triangleq\, s_1} - H^{(2)}\underbrace{\left(a_2 - j\, I^{(2)}_{m_0,n_0}\right)}_{\neq\, s_2^*} + \eta_{m_0,n_0} = H^{(1)}s_1 - H^{(2)}\left(s_2^* + j\, I_1\right) + \eta_{m_0,n_0} \qquad I_1 \triangleq I^{(1)}_{m_0+1,n_0} - I^{(2)}_{m_0,n_0}$$

$$y_{m_0+1,n_0} = H^{(1)}\underbrace{\left(a_2 + j\, I^{(1)}_{m_0+1,n_0}\right)}_{\triangleq\, s_2} + H^{(2)}\underbrace{\left(a_1 + j\, I^{(2)}_{m_0+1,n_0}\right)}_{\neq\, s_1^*} + \eta_{m_0+1,n_0} = H^{(1)}s_2 + H^{(2)}\left(s_1^* + j\, I_2\right) + \eta_{m_0+1,n_0} \qquad I_2 \triangleq I^{(1)}_{m_0,n_0} + I^{(2)}_{m_0+1,n_0}$$

$$\begin{bmatrix} y_{m_0,n_0} \\ y^*_{m_0+1,n_0} \end{bmatrix} = \underbrace{\begin{bmatrix} H^{(1)} & -H^{(2)} \\ H^{(2)^*} & H^{(1)^*} \end{bmatrix}}_{\text{Orthogonal design}} \begin{bmatrix} s_1 \\ s_2^* \end{bmatrix} + j \underbrace{\begin{bmatrix} -H^{(2)}\, I_1 \\ H^{(2)^*}\, I_2 \end{bmatrix}}_{\text{Orthogonality is lost}} + \begin{bmatrix} \eta_{m_0,n_0} \\ \eta^*_{m_0+1,n_0} \end{bmatrix}$$

# Fig. 5

precoding PAM
symbols signal                    channel matrices              noise

Precoding symbols are chosen to cancel (zero) the intrinsic interference:

$$y_{m_0,n_0} = H^{(1)}\left(a_1 + j \overbrace{I^{(1)}_{m_0,n_0}}^{\to 0}\right) - H^{(2)}\left(a_2 - j \overbrace{I^{(2)}_{m_0,n_0}}^{\to 0}\right) + \eta_{m_0,n_0}$$

$$y_{m_0+1,n_0} = H^{(1)}\left(a_2 + j \overbrace{I^{(1)}_{m_0+1,n_0}}^{\to 0}\right) + H^{(2)}\left(a_1 + j \overbrace{I^{(2)}_{m_0+1,n_0}}^{\to 0}\right) + \eta_{m_0+1,n_0}$$

# Fig. 6

## Transmission of one PAM symbol using two resources:

at the sender:

$$x \in R$$

● precoding used to protect data

$$a_{m_0,n_0} \in R$$

○ data

transmit →

at the receiver:

● useless

$$a_{m_0,n_0} \in R$$

○ data, useful

# Fig. 7

precoding symbols    PAM signal    channel matrices    noise    ambiguity functions:

Precoding symbols $x_1$, $x_2$ are chosen to cancel (zero) "composite" intrinsic interference :

$$y_{m_0,n_0} = H^{(1)}\underbrace{\left(a_1 + j\, I^{(1)}_{m_0,n_0}\right)}_{\triangleq\, s_1} - H^{(2)}\underbrace{\left(a_2 - j\, I^{(2)}_{m_0,n_0}\right)}_{\neq\, s_2^*} + \eta_{m_0,n_0} = H^{(1)}s_1 - H^{(2)}\left(s_2^* + j\,\overbrace{I_1}^{\to 0}\right) + \eta_{m_0,n_0} \qquad I_1 \triangleq I^{(1)}_{m_0+1,n_0} - I^{(2)}_{m_0,n_0}$$

$$y_{m_0+1,n_0} = H^{(1)}\underbrace{\left(a_2 + j\, I^{(1)}_{m_0+1,n_0}\right)}_{\triangleq\, s_2} + H^{(2)}\underbrace{\left(a_1 + j\, I^{(2)}_{m_0+1,n_0}\right)}_{\neq\, s_1^*} + \eta_{m_0+1,n_0} = H^{(1)}s_2 + H^{(2)}\left(s_1^* + j\,\overbrace{I_2}^{\to 0}\right) + \eta_{m_0+1,n_0} \qquad I_2 \triangleq I^{(1)}_{m_0,n_0} + I^{(2)}_{m_0+1,n_0}$$

➜ Alamouti

EP 3 076 576 A1

Europäisches
Patentamt

European
Patent Office

Office européen
des brevets

# EUROPEAN SEARCH REPORT

Application Number

EP 15 16 2248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ILHEM BLEL ET AL: "Alamouti OFDM/OQAM Systems with Time Reversal Technique", COMPUTER SCIENCE & INFORMATION TECHNOLOGY ( CS & IT ), 27 December 2014 (2014-12-27), pages 119-130, XP055214602, DOI: 10.5121/csit.2014.41310 ISBN: 978-1-92-198719-9 * Section 3. * * figure 3 * | 1-15 | INV. H04L1/06 H04L27/26 |
| A | WO 2006/117269 A1 (FRANCE TELECOM [FR]; JAVAUDIN JEAN-PHILIPPE [FR]; BOUVET PIERRE-JEAN []) 9 November 2006 (2006-11-09) * page 12, line 17 - page 14, line 7 * | 1,14,15 | |
| A | JAVAUDIN J-P ET AL: "Pilot-aided channel estimation for OFDM/OQAM", VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, vol. 3, 22 April 2003 (2003-04-22), pages 1581-1585, XP010862427, DOI: 10.1109/VETECS.2003.1207088 ISBN: 978-0-7803-7757-8 * Sections III. and IV. * | 1,14,15 | TECHNICAL FIELDS SEARCHED (IPC) H04L |

The present search report has been drawn up for all claims

| Place of search | Date of completion of the search | Examiner |
|---|---|---|
| Berlin | 22 September 2015 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 2248

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2015

| Patent document cited in search report | Publication date | Patent family member(s) | Publication date |
|---|---|---|---|
| WO 2006117269 A1 | 09-11-2006 | AT 518346 T | 15-08-2011 |
| | | CN 101233733 A | 30-07-2008 |
| | | EP 1878185 A1 | 16-01-2008 |
| | | ES 2370514 T3 | 19-12-2011 |
| | | FR 2885470 A1 | 10-11-2006 |
| | | JP 2008541524 A | 20-11-2008 |
| | | US 2008260061 A1 | 23-10-2008 |
| | | WO 2006117269 A1 | 09-11-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. M. ALAMOUTI.** A simple transmit diversity technique for wireless communications. *IEEE Journal on Select Areas in Communications,* October 1998, vol. 16 (8
- **M. BELLANGER.** Transmit diversity in multicarrier transmission using OQAM modulation. *Proc. The 3rd Int. Symposium on Wireless Pervasive Computing,* May 2008, 727-730
- **H. LIN ; C. LELE ; P. SIOHAN.** A pseudo Alamouti transceiver design for OFDM/OQAM modulation with cyclic prefix. *Proc. SPAWC,* 2009
- **C. LELE ; P. SIOHAN ; R. LEGOUABLE.** The Alamouti scheme with CDMA-OFDM/OQAM. *EURASIP Journal on Advances in Signal Processing,* 2010
- **M. RENFORS ; T. IHALAINEN ; T. H. STITZ.** A Block-Alamouti Scheme for Filter Bank Based Multicarrier Transmission. *Proceedings of the European Wireless Conference,* 2010